# EUROPEAN PATENT SPECIFICATION

(11) **EP 0 516 776 B1**
(45) Date of publication and mention of the grant of the patent: **24.08.1994**
(21) Application number: 91920469.3
(22) Date of filing: 22.11.1991
(51) Int. Cl.: A01K 91/18

(54) **MEANS FOR HANDLING A LONG LINE ON A FISHING VESSEL**
HANDHABUNGSVORRICHTUNG FUER EINE LANGLEINE AUF EINEM FISCHEREIFAHRZEUG
DISPOSITIF DE MANIEMENT D'UNE PALANGRE SUR UN BATEAU DE PECHE

(30) Priority: 22.11.1990 SE 9003711
(43) Date of publication of application: 09.12.1992
(73) Proprietor: BJORNSON, Aegir, S-450 43 Smögen (SE); HASSLOF, Hans-Oskar, S-456 00 Kungshamn (SE)
(72) Inventor: BJORNSON, Aegir, S-450 43 Smögen (SE); HASSLOF, Hans-Oskar, S-456 00 Kungshamn (SE)
(74) Representative: Graudums, Valdis
(86) International application number: PCT/SE91/00794
(87) International publication number: WO 92/09194

(56) References cited:
- NO-A- 104 806
- SE-A- 118 175

## Description

### TECHNICAL FIELD:

The present invention relates to means for handling monofilament line and branch lines during laying out and drawing in of long line on a fishing vessel, of the type set forth in the preamble of claim 1.

### BACKGROUND OF THE INVENTION:

A long line used in commercial fishing may have a length of several thousand metres. Handling of a long line during baiting, laying out and drawing in has traditionally been very labour-intensive. Accordingly, equipment has been under development for many years to mechanize this task.

Most of the systems for handling long line are directed to the problem of preventing the hooks and branch lines from becoming entwined. The main line is normally allowed to hang freely beneath the hook magazine. This arrangement is satisfactory if the main line is of a woven type. If instead the main line is a single fibre line, i.e. monofilament, the traditional handling of long line is very much adversely affected, particularly when the fishing vessel is subjected to heavy swell. This is because a monofilament line with a diameter of, for example, 2 mm is relatively stiff and acts like a thin spiral spring which is pulled apart coil by coil during the laying out of the long line.

It has however been shown that use of monofilament line is advantageous for fishing since this type of line does not absorb impurities and microorganisms. This implies that the line does not "smell" in the water and is therefore more effective for fishing.

### TECHNICAL PROBLEM:

It is therefore an object of the present invention to provide means on a fishing vessel which allows simpler and safer handling of monofilament line.

### SOLUTION:

This object is achieved by the features set forth in the characterizing portion of claim 1.

### ADVANTAGES:

Due to the arrangement of the oblong carriers at the bow and stern of the fishing vessel, an inexpensive aid for controlled winding up and unwinding of monofilament line is obtained.

Preferred embodiments of the invention are detailed in the dependent claims.

### BRIEF DESCRIPTION OF THE DRAWINGS:

A preferred embodiment of the invention will be described in more detail in the following with reference to the attached drawings in which:

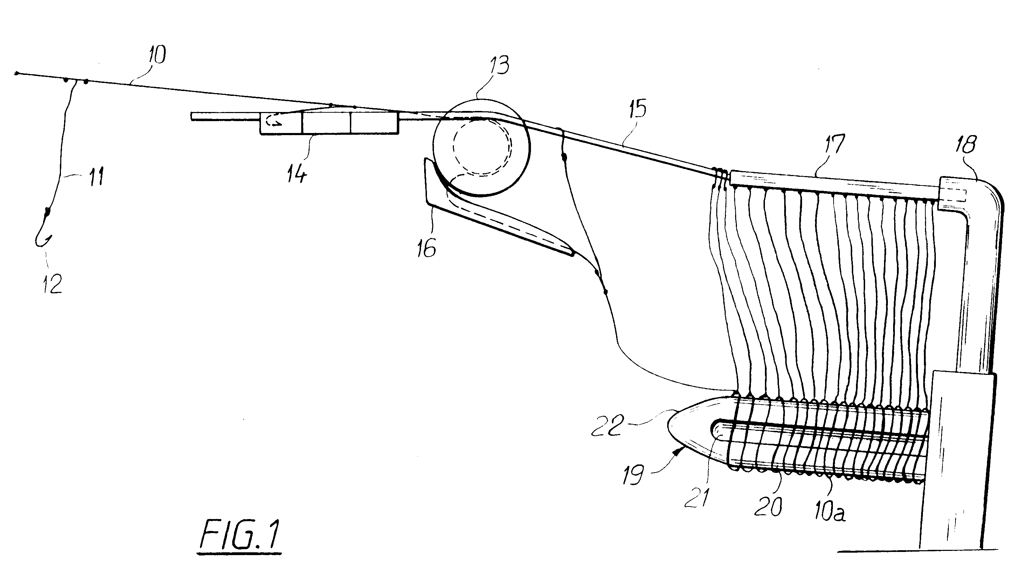

- Fig. 1: shows the carrier at the bow of the fishing vessel together with a schematically illustrated arrangement for drawing in of a long line, and
- Fig. 2: shows the carrier at the stern of the fishing vessel together with a schematically illustrated arrangement for laying out a long line.

A long line is shown in the drawings with a main line 10, branch lines 11 and hooks 12. The long line can have a total length of around 30 km, though in the present case it is divided into sections of around 500 m length.

The long line is taken up at the bow of the fishing vessel by means of a schematically illustrated arrangement comprising a winch-drum 13, a collector device 14 with a guide rail 15 for the hooks 12, and a stripper 16 for the main line 10 from the winch-drum 13. The hooks are manually displaced from the guide rail 15 into a magazine 17 in the form of a hollow profile which is connected to the guide rail 15 and which maintains the hooks in spaced relationship in series. The magazine 17 is placed in a holding fixture 18 which is mounted on a support.

The support also carries a carrier 19 which comprises a substantially cylindrical oblong body 20 onto which the main line is simultaneously manually wound whilst the hooks are fed into the magazine 17. The oblong body 20 is provided with a groove 21 running along its surface which allows an arm to be inserted so that a strap or similar can be fastened around a main line coil 10a of the long line section. The oblong body 20 is further provided with a conically-shaped end-piece 22 which facilitates the coiling of the main line.

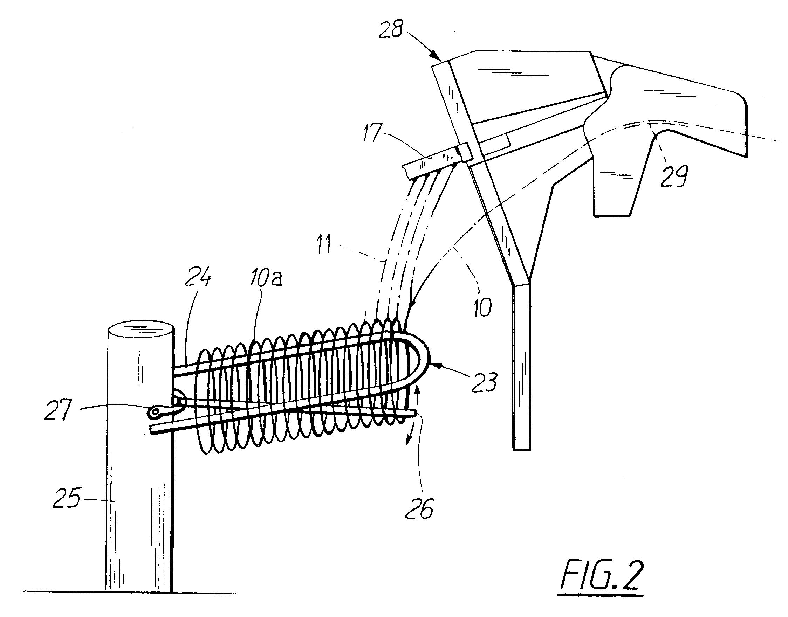

The long line section bound by a strap, together with its associated magazine 17, can now be transferred to the stern of the fishing vessel from where it can later be laid out. Fig. 2 shows a carrier 23 arranged at the stern of the fishing vesel which consists of an extended U-shaped yoke 24 which is fixedly attached to a support 25 and a rod 26 which is movable within the yoke. The rod is pivotabbly attached to the support 25 at a pivot point 27. When the long line coil 10a is to be inserted on the carrier 23, the rod 26 is lifted so that it will end up in the centre of the coil. It is then easy to slip on the coil, whereafter the rod can be released to press down the end of the coil 10a remote from the support 25. The retaining strap can then be removed and the long line section's forward end can be connected to the rear end of the previous long line section. The magazine has meanwhile been placed in a holding fixture 28 which includes a device for automatic baiting and feeding out of the long line.

During this feeding out the movable rod 26 ensures that only one loop at a time can be drawn from the carrier 23. So that the feeding out from the carrier takes place smoothly and with just sufficent braking of the line with each removal of the separate loops, the line should be drawn from the carrier at a certain average angle with respect to the carrier's direction of length. This angle is dependent on several factors, such as the length of the branch lines and the type of laying out apparatus 29, though it should be in the order of 15-30°.

The invention is not restricted to the above-described embodiment, and several variants are conceivable within the scope of the appended claims. The invention is neither restricted to the drawing in and laying out apparatus shown in the drawings. Furthermore, various types of magazine can conceivably be used together with the means according to the invention, as defined by the appended claims.

## Claims

1. Means for handling monofilament long line (10) and branch lines (11) during laying out and drawing in of said long line on a fishing vessel, which long line is stored with the hooks (12) which are maintained in a magazine (17) before laying out and after drawing in, intended for use on a fishing vessel of which the bow and stern are each provided with at least one holding fixture (18; 28) for receiving one end of said magazine (17) and an oblong carrier (19; 23) for holding said long line (10) in a coiled state and acting in cooperation with said at least one holding fixture,
**characterized** in that said means comprises said long line carrier or carriers (19) adapted to be fitted at the bow of the vessel and in the form of substantially cylindrical body (20) adapted to be situated below its associated holding fixture (18), and in that said long line carrier or carriers (23) adapted to be fitted at the stern of the vessel is adapted to be situated below its associated holding fixture (28) and comprises a fixed U-shaped yoke (24) and a member (26) displaceable in a vertical plane which is influenced by gravity to press down the region of the coil hanging down from the yoke to form a brake means to ensure that the coil loops are drawn one by one from the carrier (23) during laying out of the long line.

2. Means according to claim 1, **characterized in** that the body (20) is provided with at least one groove extending axially along the surface of the body, which allows an arm to be inserted in the coil for gathering and binding of the coil and transferring it, together with the magazine (17), to the stern of the vessel.

3. Means according to claim 1 or 2, **characterized in** that the free end of the cylindrical body (20) is provided with a conically-shaped end-piece (22).

## Patentansprüche

1. Handhabungsvorrichtung für eine lange Einfaserleine (10) und Abzweigleinen (11) während des Auslegens und Einziehens der langen Leine auf einem Fischereifahrzeug, wobei die lange Leine mit den Haken (12), welche in einem Magazin (17) vor dem Auslegen und nach dem Einziehen gehalten sind, zur vorgesehenen Verwendung auf einem Fischereifahrzeug aufbewahrt wird, bei dem der Bug und das Heck jeweils mit einer Haltebefestigung (18; 28) zur Aufnahme eines Endes des Magazins (17) und eines länglichen Trägers (19; 23) zum Halten der langen Leine (10) in einem aufgewickelten Zu-stand und zum Zusammenwirken mit der wenigstens eine Haltebefestigung versehen sind,
**dadurch gekennzeichnet,** daß
die Vorrichtung den bzw. die Träger (19) aufweist, welche an dem Bug des Fahrzeugs und in Form eines im wesentlichen zylindrischen Körpers (20) befestigbar und unterhalb deren zugeordneter Haltebefestigung (18) plazierbar sind, und daß der bzw. die Träger (23), die an dem Heck des Fahrzeugs befestigbar sind, unterhalb seiner zugeordneten Haltebefestigung (28) plazierbar sind und ein festes U-Joch (24) und ein in einer vertikalen Ebene verlagerbares Teil (26) aufweisen, das durch die Schwerkraft für das Niederdrücken des Bereichs der vom Joch herunterhängenden Wicklung zwecks Bildung einer Bremseinrichtung zum Gewährleisten des nacheinander Abziehens der Wicklungsschleifen von dem Träger (23) während des Auslegens der langen Leine beeinflußt ist.

2. Vorrichtung nach Anspruch 1, dadurch gekennzeichnet, daß der Körper (20) mit wenigstens einer sich in axialer Richtung längs der Oberfläche des Körpers erstreckenden Nut versehen ist, mittels der ein Arm in die Wicklung zum Sammeln und Binden der Wicklung und deren Transfer gemeinsam mit dem Magazin (17) zu dem Heck des Fahrzeugs einsetzbar ist.

3. Vorrichtung nach Anspruch 1 oder 2, dadurch gekennzeichnet, daß das freie Ende des zylindrischen Körpers (20) mit einem kegelförmigen Endteil (22) versehen ist.

## Revendications

1. Moyens de maniement d'une palangre monofil (10) et d'empiles (11) pendant la pose et le retrait de ladite palangre sur un bateau de pêche, laquelle palangre est rangée avec les hameçons (12) qui sont maintenus dans un magasin (17) avant la pose et après le retrait, prévus pour être utilisés sur un bateau de pêche dont la proue et la poupe sont chacune munies d'au moins un dispositif de fixation et de maintien (18 ; 28) pour recevoir une extrémité dudit magasin (17) et un support oblong (19 ; 23) pour maintenir ladite palangre (10) dans un état bobiné et agir en association avec ledit au moins un dispositif de fixation et de maintien, caractérisés en ce que lesdits moyens comprennent ledit ou lesdits support(s) (19) de palangre conçu(s) pour être placé(s) à la proue du bateau et ayant la forme d'un corps (20) sensiblement cylindrique prévu pour être situé en dessous de son dispositif de fixation et de maintien (18) associé, et en ce que ledit ou lesdits support(s) (23) de palangre conçu(s) pour être placé(s) à la poupe du bateau est (sont) prévu(s) pour être situé(s) en dessous de son (leur) dispositif de fixation et de maintien (28) associé et comprend (comprennent) un arceau fixe en U (24) et un élément (26) pouvant se déplacer dans un plan vertical qui, sous l'effet de la pesanteur, appuie sur la zone de la bobine suspendue à l'arceau pour former un moyen de frein afin d'assurer que les spires de la bobine sont tirées une par une à partir du support (23) pendant la pose de la palangre.

2. Moyens selon la revendication 1, caractérisés en ce que le corps (20) est muni d'au moins une gorge s'étendant axialement le long de la surface du corps, ce qui permet à un bras d'être inséré dans la bobine pour le groupement et la liaison de la bobine et son transport, en même temps que le magasin (17), jusqu'à la poupe du bateau.

3. Moyens selon la revendication 1 ou 2, caractérisés en ce que l'extrémité libre du corps cylindrique (20) est munie d'une pièce d'extrémité (22) de forme conique.
